# EUROPÄISCHE PATENTSCHRIFT

(11) **EP 0 884 273 B1**
(45) Veröffentlichungstag und Bekanntmachung des Hinweises auf die Patenterteilung: **16.01.2002**
(21) Anmeldenummer: 98110587.7
(22) Anmeldetag: 09.06.1998
(51) Int. Cl.: C01B 3/32

(54) **Verfahren zum Betrieb einer Methanolreformierungsanlage**
Process for operating a methanol reforming apparatus
Procédé d'opération d'un dispositif de reformage de méthanol

(30) Priorität: 13.06.1997 DE 19725008
(43) Veröffentlichungstag der Anmeldung: 16.12.1998
(73) Patentinhaber: XCELLSIS GmbH, 73230 Kirchheim / Teck-Nabern (DE); BASF AKTIENGESELLSCHAFT, 67056 Ludwigshafen (DE)
(72) Erfinder: Autenrieth, Rainer, 89155 Erbach (DE); Christen, Andreas, 53940 Kehr (DE); Schüssler, Martin, 89077 Ulm (DE); Krumberger, Otto, Dr., 68163 Mannheim (DE)

(56) Entgegenhaltungen:
- US-A- 4 855 267
- US-A- 5 075 268
- PATENT ABSTRACTS OF JAPAN vol. 012, no. 258 (C-513), 20. Juli 1988 & JP 63 044934 A (FUJI ELECTRIC CO LTD), 25. Februar 1988
- Y. NAKAZAKI ET AL.: "Highly selective decomposition of methanol to syngas on nickel-based composite catalysts using an artificial intelligence control reactor system" INDUSTRIAL AND ENGINEERING CHEMISTRY, PROCESS DESIGN AND DEVELOPMENT., Bd. 28, 1989, Seiten 1285-1289, XP002075330 WASHINGTON US

## Beschreibung

Die Erfindung bezieht sich auf ein Verfahren zum Betrieb einer Methanolreformierungsanlage nach dem Oberbegriff des Anspruchs 1.

Verfahren zur Methanolreformierung sind verschiedentlich bekannt und dienen beispielsweise zur Erzeugung von Wasserstoff für die Brennstoffzellen eines brennstoffzellenbetriebenen Kraftfahrzeuges mittels Wasserdampfreformierung von flüssig mitgeführtem Methanol. Als Katalysatormaterial eignet sich beispielsweise ein katalytisch aktives Cu/ZnO-Material auf einem Aluminiumoxidträger. Weitere verwendbare Katalysatorzusammensetzungen sind zum Beispiel in den Offenlegungsschriften DE 35 31 757 A1 und EP 0 201 070 A1 beschrieben. Meist wird das Katalysatormaterial in Form einer Pelletschüttung in den Reformierungsreaktionsraum des betreffenden Methanolreformierungsreaktors eingebracht.

Es ist eine bekannte Tatsache gängiger Methanolreformierungskatalysatoren, daß sie während des Reformierungsreaktionsbetriebes eine Abnahme ihrer spezifischen Aktivität zeigen. Dies gilt besonders beim Betrieb mit hoher Belastung, wie er in mobilen Anwendungen wünschenswert ist. Für dieses Einsatzgebiet wird aus Platz- und Gewichtsgründen ein besonders kompakter Aufbau des Reaktors angestrebt, der dann zur Erzielung der geforderten Umsatzleistung mit entsprechend hoher Belastung betrieben wird. Ein öfterer Austausch des Katalysatormaterials ist unter Berücksichtigung der für Kraftfahrzeugnutzer gewohnten Mobilitäts- und Serviceerwartungen nur schwerlich akzeptabel.

Es sind bereits unterschiedliche Verfahren zur Aufrechterhaltung einer hohen katalytischen Aktivität bzw. zur Erzielung einer hohen Lebensdauer des Methanolreformierungskatalysators vorgeschlagen worden. So wird in der Offenlegungsschrift JP 4-141234 (A) zur Gewinnung eines Katalysators mit langer Lebensdauer sowie hoher Aktivität und Selektivität eine spezielle Rezeptur verschiedener Metalloxide angegeben.

In der Offenlegungsschrift JP 63-310703 (A) wird das Katalysatormaterial im Reformierungsreaktionsraum eines Methanolreformierungsreaktors vor Beginn des Reformierungsreaktionsbetriebes einer Reduktionsreaktion unterzogen, die zu einer Volumenabnahme des Katalysators führt. Eine druckfederbelastete, bewegliche Deckplatte hält das als Pelletschüttung in den Reaktionsraum eingebrachte Katalysatormaterial als dichte Packung zusammengedrückt. Die Reduktionsreaktion ist ein für den Betrieb eines Cu-Katalysator notwendiger Vorgang. Der dabei auftretende Volumenschwund ist deutlich geringer als der Volumenschwund, der während des normalen Reformierungsbetriebs auftritt.

In der Offenlegungsschrift JP 63-315501 (A) wird das Einbringen einer Luftkammer zwischen einen Brenner und einen Reformierungsreaktionsraum vorgeschlagen, über die in kontrollierter Weise Luft zuführbar ist, um die Katalysatortemperatur auf einem vorgegebenen Wert zu halten.

Bei einem in der Offenlegungsschrift DE 33 14 131 A1 offenbarten Verfahren wird zur Verlängerung der Lebensdauer des Methanolreformierungskatalysators das Methanol von darin ggf. enthaltenen Chlorverbindungen befreit, bevor es mit dem Katalysator in Kontakt gebracht wird.

In der Auslegeschrift DE 1 246 688 ist ein Verfahren der eingangs genannten Art beschrieben, bei dem ein Methanol/Wasser-Gemisch zur Methanolreformierung über einen Nickelkatalysator und einen Zink/Kupfer-Katalysator geleitet wird. Dieser Reformierungsbetrieb wird periodisch für Katalysatorbehandlungsphasen unterbrochen, die jeweils aus einer Katalysatorregenerationsphase und optional einer daran anschließenden Nickelkatalysatorreaktivierungsphase bestehen. Die Regenerationsphase besteht darin, ein Gas, welches freien Sauerstoff enthält, bei erhöhter Temperatur von vorzugsweise 150°C bis 450°C durch den Reaktor zu leiten. Die optionale Nickelkatalysatorreaktivierungsphase besteht darin, ein Gas, welches freien Wasserstoff enthält, bei erhöhter Temperatur über das Katalysatorsystem zu leiten.

In der Patentschrift US 4.855.267 wird ein Zweischritt-Regenerationsverfahren für kupferhaltige Methanolumsetzungskatalysatoren beschrieben, bei dem die Kupferkomponente des Katalysatormaterials in einem ersten Schritt oxidiert und in einem zweiten Schritt in einer reduzierenden Atmosphäre, insbesondere unter Verwendung eines wasserstoffhaltigen Gasstroms, reduziert wird. Eine alleinige Oxidation oder Reduktion eines dort beispielhaft untersuchten Cu- und Cr-haltigen Katalysatormaterials wird als ineffektiv bezeichnet.

Der Erfindung liegt als technisches Problem die Bereitstellung eines Verfahrens der eingangs genannten Art zugrunde, durch das sich eine Methanolreformierungsanlage, die ein Cu/ZnO/Al₂O₃-Katalysatormaterial beinhaltet und/oder in einem Kraftfahrzeug eingebaut ist, mit vergleichsweise geringem Aufwand über längere Betriebsdauern hinweg mit nicht merklich abfallender Reformierungsumsatzleistung betreiben läßt.

Die Erfindung löst dieses Problem durch die Bereitstellung eines Verfahrens zum Betrieb einer Methanolreformierungsanlage mit den Merkmalen des Anspruchs 1 oder 2. Bei diesem Verfahren wird der Reformierungsreaktionsbetrieb zu vorgegebenen Zeitpunkten einzig für Katalysatorreaktivierungsphasen unterbrochen, während denen der den Methanolreformierungskatalysator enthaltende Methanolreformierungsreaktor zur aktivitätsregenerierenden Behandlung des im Reformierungsreaktionsbetrieb in seiner katalytischen Aktivität nachlassenden Methanolreformierungskatalysators lediglich eine aktivitätsregenerierenden Spülung mit Wasserstoffgas oder einem wasserstoffreichen Gas unterzogen wird. Ein weiterer Vorteil dieser Reaktivierungsphasen besteht darin, daß durch das Wasserstoffgas etwaige unformierte Bereiche des Katalysators formiert werden. Das Wasserstoffgas kann aus dem vorangegangenen Reformierungsreaktionsbetrieb stammen.

Durch die Zwischenschaltung solcher Reaktivierungsphasen läßt sich die ursprüngliche Aktivität eines Cu/ZnO/Al₂O₃-Katalysatormaterials gemäß Anspruch 1 wenigstens teilweise wiederherstellen, was insgesamt längere Betriebsdauern der Anlage ohne merklich nachlassende Reformierungsumsatzleistung und ohne die Notwendigkeit eines Katalysatoraustauschs ermöglicht.

Die Reaktivierungsphasen lassen sich bei Einsatz der Anlage in Kraftfahrzeugen in den normalen Fahrbetrieb integrieren. Das durch Anspruch 2 gegebene Verfahren ist für derartige Methanolreformierungsanlagen von Kraftfahrzeugen gedacht und sieht vor, die Katalysatorreaktivierungsphasen fahrerangefordert auszulösen und/oder selbsttätig dann auszulösen, wenn das Fahrzeug seit einer vorgebbaren Zeitdauer steht, insbesondere auch im laufenden Fahrbetrieb wegen eines Ampelstopps oder Staus.

Als Ausführungsbeispiel sei stellvertretend für zahlreiche weitere Realisierungen der Erfindung eine in einem brennstoffzellenbetriebenen Kraftfahrzeug angeordnete Methanolreformierungsanlage erwähnt, mit welcher der für die Brennstoffzellen benötigte Wasserstoff mittels Wasserdampfreformierung von flüssig mitgeführtem Methanol erzeugt wird. Im Reformierungsreaktionsraum des zugehörigen Reaktors befindet sich ein geeigneter Methanolreformierungskatalysator, z.B. ein Cu/ZnO/Al₂O₃-Katalysatormaterial in Form einer Pelletschüttung.

Derartige Methanolreformierungsanlagen sind in verschiedenen Typen bekannt und bedürfen daher hier keiner weiteren Erläuterung und zeichnerischen Darstellung.

Im normalen Reformierungsreaktionsbetrieb erzeugt die Anlage die gewünschte Menge an wasserstoffreichem Reformatgas mit ausreichend geringem CO-Gehalt. Dabei wird die Anlage im Reformierungsreaktionsbetrieb überwiegend bei maximaler Belastung gefahren, da sie aus Platz- und Gewichtsersparnisgründen bei gegebenem Leistungsbedarf möglichst kompakt gebaut ist. Gerade auch aufgrund dieser Betriebsart mit maximaler oder annähernd maximaler Belastung, d.h. unter Vollast, tritt mit zunehmender Betriebsdauer eine Abnahme der spezifischen katalytischen Aktivität des Methanolreformierungskatalysators auf. Um dennoch eine vergleichsweise lange Betriebsdauer der Anlage mit hoher Umsatzleistung ohne Austausch des Katalysators zu gewährleisten, wird der Reformierungsreaktionsbetrieb zu vorgegebenen Zeitpunkten für Katalysatorreaktivierungsphasen unterbrochen, während denen der Methanolreformierungskatalysator aktivitätsregenerierend behandelt wird, um dadurch seine anfängliche Aktivität wenigstens teilweise wiederherzustellen.

Die aktivitätsregenerierende Behandlung des Methanolreformierungskatalysators besteht darin, den Reaktor und damit das in ihm enthaltene Katalysatormaterial während der Katalysatorreaktivierungsphasen mit Wasserstoffgas oder einem wasserstoffreichen Gas zu spülen. Die übrigen Prozeßbedingungen können in jeweils geigneter, auf das betreffende Katalysatormaterial abgestimmter Weise gewählt werden und sind dann in den jeweiligen Katalysatorreaktivierungsphasen einzuhalten. Es zeigt sich, daß mit einer solchen Spülung mit Wasserstoffgas die anfängliche Katalysatoraktivität wenigstens teilweise wiederhergestellt wird.

Für die Zeitpunkte der Auslösung einer jeweiligen Katalysatorreaktivierungsphase für die im Kraftfahrzeug befindliche Anlage stehen mehrere Varianten zur Verfügung. Zum einen kann die Möglichkeit einer fahrerangeforderten Auslösung vorgesehen sein, beispielsweise über eine entsprechende Bedientaste. Der Kraftfahrzeugnutzer kann dann z.B. jeweils nach Abstellen des Kraftfahrzeuges durch Betätigung der Bedientaste eine Katalysatorreaktivierungsphase auslösen. Zusätzlich oder alternativ zu dieser Maßnahme kann eine selbstätige Auslösung der Katalysatorreaktivierungsphasen vorgesehen sein, beispielsweise immer dann, wenn sich Fahrzeugstillstandsphasen ergeben, d.h. wenn das Fahrzeug seit einer vorgebbaren Zeitdauer steht, z.B. wegen eines Ampelstops oder eines Staus. Von hierzu fahrzeugseitig vorgesehenen Detektionsmitteln wird das Auftreten solcher Fahrzeugsstillstandsphasen selbstätig erfaßt, wonach die Detektionsmittel dann die jeweilige Katalysatorreaktivierungsphase für die Methanolreformierungsanlage auslösen. Bei Bedarf können sowohl die automatische als auch die fahrerangeforderte Auslösung von Katalysatorreaktivierungsphasen realisiert sein. In jedem Fall ist es möglich, die Katalysatorreaktivierungsphasen in den laufenden Fahrbetrieb zu integrieren, ohne denselben nur für diesen Zweck unterbrechen zu müssen.

Es versteht sich, daß die Reaktivierungsphasen nur jeweils so lange durchgeführt zu werden brauchen, bis die anfängliche Katalysatoraktivität weitestgehend wiederhergestellt ist oder sich jedenfalls keine wesentliche Aktivitätssteigerung mehr ergibt. Dabei werden die Katalysatorreaktivierungsphasen jedoch gegebenenfalls vorzeitig beendet, wenn dies durch den vom Fahrer gesteuerten Fahrbetrieb veranlaßt wird, d.h. wenn die Methanolreformierungsanlage zur Bereitstellung der momentan benötigten Wasserstoffmenge für die Brennstoffzellen im Vollastbereich bei der optimalen Methanolreformierungstemperatur und damit im Reformierungsreaktionsbetrieb gefahren werden muß.

Der zum Spülen des Reaktors während der Katalysatorreaktivierungsphasen verwendete Wasserstoff kann aus dem vorangegangenen Reformierungsreaktionsbetrieb der Anlage stammen, indem ein Teil des in diesen Betriebsphasen erzeugten Wasserstoffs nicht den Brennstoffzellen zugeführt, sondern in einem Wasserstoffspeicher zwischengespeichert wird. Der zwischengespeicherte Wasserstoff steht dann für eine spätere Katalysatorreaktivierungsphase zur Verfügung.

Das Spülen des Reaktors mit Wasserstoffgas während der Katalysatorreaktivierungsphase und das daraus folgende Inkontakttreten des Katalysatormaterials mit dem vorbeiströmenden Wasserstoff hat den weiteren vorteilhaften Effekt, daß Teile des Katalysatormaterials, die möglicherweise noch in unformiertem und damit katalytisch passivem Zustand vorliegen, durch den Wasserstoff formiert werden und damit im anschließenden Reformierungsreaktionsbetrieb ihre katalytische Wirkung entfalten können.

Die obige Beschreibung eines vorteilhaften Verfahrensbeispiels zeigt, daß sich mit dem erfindungsgemäßen Verfahren eine Methanolreformierungsanlage über längere Betriebsdauern hinweg mit im wesentlichen gleichbleibend hoher Katalysatoraktivität und damit Reformierungsumsatzleistung betreiben läßt, auch wenn die Anlage dabei meist im Vollastbereich gefahren wird. Ein häufigerer Austausch des Katalysatormaterials im Reaktor ist durch die aktivitätsregenerierenden Behandlungen des Methanolreformierungskatalysators während der Katalysatorreaktivierungsphasen nicht erforderlich, wobei diese Reaktivierungsphasen im Fall des Einsatzes der Anlage in einem Kraftfahrzeug ohne Störung des laufenden Fahrbetriebs des Fahrzeuges durchgeführt werden können. Dies erfüllt die Mobilitäts- und Serviceerwartungen, an welche die Kraftfahrzeugnutzer herkömmlicherweise gewohnt sind, was diesbezügliche Akzeptanzprobleme vermeidet.

## Patentansprüche

1. Verfahren zum Betrieb einer Methanolreformierungsnlage, bei dem
- im Reformierungsreaktionsbetrieb Methanol in einem Methanolreformierungsreaktor unter Verwendung eines in ihm enthaltenen Methanolreformierungskatalysators reformiert wird und
- der Reformierungsreaktionsbetrieb zu vorgegebenen Zeitpunkten für Katalysatorbehandlungsphasen unterbrochen wird,
**dadurch gekennzeichnet, daß**
- als Methanolreformierungskatalysator ein Cu/ZnO/Al₂O₃-Katalysatormaterial verwendet wird und die Katalysatorbehandlungsphasen allein aus Katalysatorreaktivierungsphasen bestehen, während denen der Reaktor zur aktivitätsregenerierenden Behandlung des im Reformierungsreaktionsbetrieb in seiner katalytischen Aktivität nachlassenden Cu/ZnO/ Al₂O₃-Methanolreformierungskatalysators einzig einer Spülung mit Wasserstoffgas oder einem wasserstoffreichen Gas unterzogen wird.

2. Verfahren nach Anspruch 1 zum Betrieb einer Methanolreformierungsanlage eines Kraftfahrzeuges, weiter
**dadurch gekennzeichnet, daß**
die Katalysatorreaktivierungsphasen fahrerangefordert oder bei länger als einer vorgebbaren Zeitdauer stehendem Fahrzeug selbsttätig ausgelöst werden.

## Claims

1. A process for operating a methanol reforming device in which
- in reforming reaction mode, methanol is reformed in a methanol reforming reactor using a methanol reforming catalyst contained therein,
- reforming reaction mode is interrupted at pre-determined intervals for catalyst reactivation phases,
**characterised in that**
- a Cu/ZnO/Al₂O₃ catalyst material is used as the methanol reforming catalyst and the catalyst treatment phases are simply catalyst reactivation phases during which the reactor is subject to rinsing with hydrogen gas or a hydrogenous gas for the activity-regenerating treatment of the Cu/ZnO/Al₂O₃ methanol reforming catalyst which suffers a drop in catalytic activity in reforming reaction mode.

2. A process in accordance with claim 1 for the operation of a methanol reforming device in a motor vehicle, further
**characterised in that**
the catalyst reactivation phases can be triggered either by driver request or automatically if the vehicle remains stationary for longer than a predetermined period of time.

## Revendications

1. Procédé pour faire fonctionner une installation de reformage du méthanol dans lequel
- dans la conduite de la réaction de reformage, du méthanol est reformé dans un réacteur de reformage du méthanol au moyen d'un catalyseur de reformage du méthanol contenu dans celui-ci et
- la conduite de la réaction de reformage est interrompue à des instants prédéterminés pour des phases de traitement du catalyseur,
**caractérisé en ce que**
- comme catalyseur de reformage du méthanol, on utilise un matériau catalytique Cu/ZnO/Al₂O₃ et les phases de traitement du catalyseur consistent uniquement en phases de réactivation du catalyseur au cours desquelles le réacteur est soumis pour le traitement de régénération de l'activité du catalyseur de reformage du méthanol Cu/ZnO/Al₂O₃ dont l'activité catalytique faiblit dans la conduite de la réaction de reformage uniquement à un balayage avec du gaz hydrogène ou un gaz riche en hydrogène.

2. Procédé selon la revendication 1 pour faire fonctionner une installation de reformage du méthanol d'un véhicule automobile,
**caractérisé en outre en ce que** les phases de réactivation du catalyseur sont déclenchées à la demande du conducteur ou automatiquement dans le cas d'un véhicule au repos plus longtemps qu'une durée prédéterminable.
